# EUROPEAN PATENT APPLICATION

(11) **EP 2 476 657 A1**
(43) Date of publication of application: **18.07.2012**
(21) Application number: 09849017.0
(22) Date of filing: 07.09.2009
(51) Int. Cl.: C04B 18/16, E01C 7/26, C04B 24/08, C04B 26/26

(54) **TEMPERATURE-ADJUSTED AND MODIFIED RECYCLED ASCON COMPOSITION FOR REUSING 100% OF WASTE ASCON FOR ROAD PAVEMENT, AND METHOD FOR MANUFACTURING SAME**

(71) Applicant: Huh, Jung Do, Seungnam-si, Gyunggi-do 463-941 (KR)
(72) Inventor: Huh, Jung Do, Seungnam-si, Gyunggi-do 463-941 (KR)
(74) Representative: Chaillot, Geneviève
(86) International application number: PCT/KR2009/005043
(87) International publication number: WO 2011/027926

(57) **Abstract**

The present invention provides compositions and manufacturing methods of a modified, RAP-recycled, temperature-controlled, asphalt mix. In detail, the 100 parts by weight of RAP having all gradations with particle sizes less than 53mm enters into the inlet of virgin aggregates in a mixer, and then after the 0.1-20 parts by weight of a recycling modifier and the 0.1-20 parts by weight of a temperature-controlling agent are added into the same mixer from the position of the virgin asphalt binder sprayer, these are mixed together to make a uniform mix for 0.5-3 minutes at a mixing temperature of 5-180°C. The resulting mix is use as a wearing course, a surface layer, an intermediate layer and a base layer of asphalt pavements. Here, a recycling modifier is to improve the physical properties, and a temperature-controlled agent takes a function of controlling production and construction temperatures for the RAP-recycled mix.

Since this invention uses exclusively RAP aggregates without using virgin aggregates, the following benefits can be achieved; that is, savings of original material cost and waste disposal fee, prevention of destructing natures due to acquirement of aggregates, savings of virgin asphalt binders and aggregates, prevention of environmental pollution due to consumption of the RAP waste, prevention of early pavement rutting and fatigue cracking due to quality improvement achieved by a recycling modifier, economic gains of extending pavement life, usage of a surface course and a surface layer of recycled pavements for major roads, energy savings in production and less evolvement of greenhouse gases by using a temperature-controlling agent, etc. The present invention will contribute to enhancing the RAP-recycling technology broadly and create economic, social, and technological benefits.

## Description

### [Technical Field]

An asphalt concrete mix is a composite material produced by mixing asphalt binder, coarse aggregate, fine aggregate and mineral filler at a high temperature, and is commonly used such as paving roads and parking lots, etc. The asphalt binder in those pavements gradually reacts with oxygen from the atmosphere, loses flexibility, and becomes hardened during pavement service period. This reaction process is called oxidative aging, and if oxidative aging persists over a long period of time, hardened pavements cause serious surface cracks and eventually ends its life cycle.

A considerable amount of waste asphalt concrete mix (or RAP; reclaimed asphalt pavement) is generated from maintenance of resolving pavement performance problems (e.g., serious rutting or fatigue cracking), extension of traffic lanes, excavation of pavements for burying sewage pipes, electrical wires or cables under pavements, and a full reconstruction of old pavements. Since such RAP collected has been already exposed to air for an extended period of time, they partially contain aged asphalt binder produced by oxidative reaction.

Without appropriate treatment of oxidized asphalt binders in RAP, just repaving after simple mixing of RAP with virgin mixes can cause serious early pavement cracks. Thus, so far, most of RAP is not used for pavement construction and rather is disposed as landfill or underground-burying. Recently, there has been growing awareness of RAP as a valuable resource, and every government around the world is strongly pushing forward to reuse more RAP in pavement construction for reasons of preventing land pollution, decreasing continual growth of RAP, saving valuable construction materials, and reducing construction costs due to addition of inexpensive RAP. In this respect, recently private companies start to actively participate at the RAP-recycling business. Even though there is subtle difference, almost identical RAP-recycling technology has commonly been applied to construction of recycled pavements all over the world.

### [Background]

Because of reasons explained above, the existing technology of RAP-recycling with large RAP has been used in remote roadways where the traffic is hardly found and good quality of pavements is not required. For major roads, RAP-use is restricted to be less than 25 wt %, and if one adds more than 25 wt %, the addition is defined to be too much. Limited amount of RAP usage requires resolution of problems such as pile-up of left-over RAP, waste disposal fee for the pile-up, environmental pollution, and waste of natural resources. Therefore, development of RAP-recycling technology to use more RAP is strongly demanded.

The existing technology of RAP-recycling aims to restore the original properties of asphalt pavements by mixing virgin materials (new aggregates, new asphalt binders, etc.), and an oil-type rejuvenator and RAP together at a high temperature. However, physical properties of majority of RAP-recycled asphalt pavements constructed by the existing recycling technology always show inferior quality, compared to virgin pavements. A major reason is the incorrect recycling mix design because the design proceeds by focusing the physical state of RAP prior to recycling, but the actual regeneration takes place afterwards. This makes property restoration toward the virgin mix impossible, because the additional oxidative aging due to high temperature heating in recycling process is not considered and deterioration of quality due to extra aging cannot be avoided. Hence, the existing RAP-recycled pavements are not free from problems of fatigue cracking, rutting and potholes. Thus, the RAP-recycled mix is regarded to be inadequate as a paving material of major roads, and related industries still have a tendency to avoid the existing technology.

In the process of the traditional hot mix asphalt, virgin aggregates are heated to more than 160°C at the drum drier and enter into the mixing chamber. In the chamber, asphalt binders at 170°C are sprayed and mixed together with aggregates. In the contrast, to melt old asphalt binders coated on cold RAP aggregates within short period of time, raising burner temperature to 200-300°C in the drum dryer is common practice, differently from 160-200°C for the burner of the virgin asphalt mix case. Maintaining such high burner temperature involves high fuel cost, more greenhouse gas evolvement, rapid oxidative aging (The higher temperature makes the more oxidative aging), and increasing brittleness of asphalt binders.

In conclusion, the existing RAP-recycling technology contains problems of relatively small RAP usage, undesirable quality of recycled pavements (less resistance of rutting, fatigue cracking and potholes) and high production temperature in a drum mixer (that generates high oxidative aging and more harmful gases). These technical limitations fail to fulfill RAP-recycling demands.

The prior patents about the RAP-recycled mix can be followed: Under Korean Patent No. 0317436, the mix ratio of RAP to virgins is limited to 30~50 wt%. To improve properties of RAP-recycled mix, each of SBR latex, EVA, SBS, SIS, or crumb rubber with a maximum size of 2mm melted in an asphalt binder at a high temperature is suggested to use together with a rejuvenator. The claimed method not only limits the content of RAP to 30~50 wt%, but also is difficult to expect the improved effect from those modified asphalt binders due to the dilution caused by presence of extra old asphalt binders in RAP. In addition, complicated recycling process and considerably less economic benefits are expected due to requirement of additional equipments, processes and transportation costs in transporting virgin aggregates, modified asphalt binders and RAP to production plants or construction sites. The method also does not take into consideration of solving problems associated with the high production temperature.

Korean Patent number 0284998 suggests manufacturing methods of high performance, modified, RAP-recycled asphalt mix used for road pavements. A fly ash and an organic fiber are added to the mix to enhance physical properties under limited use of RAP. However, the suggested method also involves the common problems of less RAP used, the inferior mechanical properties obtained, or preparation of additional equipment and processes required for adding mentioned materials above. No resolution of the problem associated with high temperature production is also found in this method.

Another Korean Patent registered as No. 0781608 proposes use of 100 wt% RAP with a recycling modifier to obtain excellent properties of RAP-recycled mix. The invention is considered to be advanced technique, but it misses consideration of stripping resistance to prevent potholes and solving high temperature production problems of oxidative aging, production cost increase due to fuel consumption, and emission of the greenhouse gas, etc.

### [Detailed Description of Invention]

### [Technical Problem]

Differently from the existing RAP-recycling technology that mixes RAP with virgin materials (virgin aggregates, virgin asphalt binders, fillers, etc.) and a rejuvenator to restore properties of the original asphalt mix from aged RAP, hereupon, this invention tries to manufacture modified, RAP-recycled, temperature-controlled asphalt concrete mix by mixing exclusively RAP, a recycling modifier and a temperature-controlling agent without using any virgin materials. By doing this, the role of the recycling modifier is to directly modify old asphalt binders in RAP and improve quality of the modified, RAP-recycled asphalt mix to be further better than the virgin asphalt mix. At the same time, by adding temperature-controlling agent, production and construction temperatures of the mix can be lowered to reduce the oxidative aging taking place at high temperatures, save the production energy, and lesson emission of the greenhouse gas. If the above goal of a new technology is accomplished, the modified, RAP-recycled, temperature-controlled asphalt mix having excellent quality can be realized by using only RAP without any virgin materials. In other words, all problems of the existing RAP-recycling technology (limitation of RAP usage, inferior quality of regenerated asphalt mix, and the high production and construction temperature) can be resolved. These technical challenges of development are the goal to be achieved in this invention.

### [Technical Solution]

As means of solving technical problems, this invention is about compositions and manufacturing methods of a modified, RAP-recycled, temperature-controlled asphalt mix to re-use 100 wt% RAP in road pavements. In detailed description, the 100 parts by weight of RAP having all particle gradations with a maximum size of 53mm are added into a mixer (of mobile, batch or continuous plants) from the new aggregate inlet, and then after 0.1-20 parts by weight of a recycling modifier together with 0.1-20 parts by weight of a temperature-controlling agent are added into the mentioned RAP in the mixer from the inlet of the virgin asphalt binder. The materials in the mixer are vigorously mixed to be well dispersed for 0.5-3 minutes at 5-180°C. The resulting mix is characterized to be used as a wearing course, a surface layer, an intermediate layer and a base layer of asphalt pavements. Here, a recycling modifier is composed of more than one agent among a softening agent, an elasticity-enhancing agent, a viscosity-thickening agent, an anti-stripping agent, an inorganic powder and a short fiber, that improves the physical properties of the RAP-recycled mix, and a temperature-controlled agent (or a warm mix additive) is composed of more than one agent among a water blowing agent, a wax and a chemical blowing agent, that is characterized to lower a production and a construction temperature of the RAP-recycled mix.

In the above, RAP includes all kinds of reclaimed asphalt pavements collected from road asphalt pavements. Lumps of RAP collected are crushed for use, but hot or cold milled RAP can be used without crushing. RAP particles have aggregate gradation, and its maximum size can be less than 55mm. It is desirable that the maximum RAP particle size of a base layer is below 53mm, the one of an intermediate layer is below 38mm, the one of a surface layer is below 26mm and the one of a wearing course is below 13.2mm. Gradation of RAP particles can be chosen desirably from one of known gradations such as a dense, a Superphalt, a porous, a gap, a SMA gradation, but any arbitrary one can be used also. The 100% RAP means using only RAP without adding any virgin aggregates.

The content of a recycling modifier designated as 0.1-20 parts by weight means that modification effect can be ignored under 0.1 parts by weight, and if the content is over 20 parts by weight, production and construction will be difficult due to high viscosity. The composition of a recycling modifier is constituted from weight percents of more than one agent among 0.5-100 wt% of a softening agent, 0.5-100 wt% of an elasticity-enhancing agent, 0.5-100 wt% of a viscosity-thickening agent, 0.1-20 wt% of an anti-stripping agent, and 0.5-100 wt% of an inorganic powder and a short fiber. When more than one agent are combined to be a recycling modifier, the constituting ratio can be arbitrary, but the total content of a recycling modifier should be in the range of 0.1-20 parts by weight compared to 100 parts by weight of RAP.

A group of a softening agent takes a role of providing softness to RAP that has been stiffened during oxidative aging. The agent is usually in a liquid state at a room temperature with a relatively low molecular weight. Even if it is a solid, it holds a relatively low melting point. The softening agent occupies 0.5-100 wt% in a recycling modifier, and the softening effect is not found under 0.5 wt%. Examples of a softening agent are organic acids (adipic acid, fumaric acid, oxalic acid, (anhydric) maleic acid, stearic acid, oleic acid, palmitic acid, terephthalic acid, or lauric acid, etc.), organic acid salts, hydrocarbon oils, aromatic oils, aliphatic oils, heavy oils, various rejuvenators, BTX (mixture of benzene, toluene & xylene) oils, various asphalt binders for road pavements, plasticizers (DBP (dibutylphthalate), DOP (dioctylphthalate), PPA (polypropyleneadipate), etc.), liquid MMA (methymethacrylate), liquid unsaturated polyesters, liquid PU (polyurethane), animal oils (cow oil, pig oil, dog oil, various fish oils, etc.), plant oils (bean oil, corn oil, sesame oil, perilla oil, cottonseed oil, castor oil, etc.), animal-plant mixed oils, mineral oil, phosphoric acid, starch, sulfur, wasted automobile oil, wasted industrial oils and mixture of the above oils all included.

A group of elasticity-enhancing agent takes a role of providing an elastic property to hardened RAP. The elastic property helps to improve resistance to various pavement cracks (low temperature cracks, fatigue cracking, impact cracks, etc.). The elasticity-enhancing agent occupies 0.5-100 wt% in a recycling modifier. When it is under 0.5 wt%, improvement of an elastic property becomes negligible. Since a recycling modifier occupies 0.1-20 parts by weight on the basis of 100 parts by weight of RAP, the 0.5 wt% of the elasticity-enhancing agent corresponds to 0.1 parts by weigh of a recycling modifier as a maximum. This value does not contribute to increase of the elastic property in RAP-recycled mix. Examples of an elasticity-enhancing agent can be illustrated as

SBS (styrene-butadiene-styrene), SBR(styrene-butadiene rubber), SEBS(styrene-ethylene-butadiene-styrene), SIS(styrene-isoprene-styrene),

ABR rubber(acrylobutadiene rubber) powder, polychloroprene rubber powder, butyl rubber powder, natural rubber powder, crumb Rubber, nitrile-butadiene rubber powder, isoprene rubber powder, ethylene-propylene-diene-monomer rubber powder, butadiene rubber powder, other elastomers including waste rubber powder and mixtures of the above elastic materials.

A group of a viscosity-thickening agent takes a role of increasing viscous properties, and is added when improvement of rutting (that is a problem of asphalt pavements) resistance is needed. This agent occupies 0.5-100 wt% in a recycling modifier, and the viscosity-thickening effect is negligible when it is under 0.5 wt%. Examples of a viscosity-thickening agent contain the thermoplastic polymers, such as HDPE(high density polyethylene), LDPE(low density polyethylene), LLDPE(linear low density polyethylene), PP(polypropylene), CPP(co-polypropylene), low molecular weight polyamide, Elvaloy, PVA(polyvinylacetate), EVA(ethylene vinylacetate copolymer), PB(polybutene), HIPS(high impact polystyrene), and mixtures of the above thermoplastic polymers.

A group of an anti-stripping agent takes a role of improving adhesion at interfaces between aggregates and asphalt binders in the modified, RAP-recycled, temperature-controlled asphalt pavements. This agent is added when one wants to prevent potholes produced after raining due to water penetration at the interfaces. Most of molecules comprising of a recycling modifier contain double bonds, carbonyl groups, or carboxylic acids in their molecular structures and these entities have good affinity with water such that water can penetrate and adhere to these groups after raining. As the result, aggregate stripping takes place at interfaces to lead to potholes. A group of an anti-stripping agent occupies 0.1-10 wt% in a recycling modifier. The effect of preventing potholes is negligible when it is used under 0.1 wt%, and the cost of the agent is too expensive when its use is over 10 wt%. Examples of an anti-stripping agent include a group of amines in the type of a liquid (or a solid easy to be melted) such as anyline, 1-naphtylamine, n-cyclohexylamine, diphenylamine, n-methylanyline, dicyclohexylamine, p-phenylenediamine, 1,3,5-triaminobenzene, ethylenediamine, diethylenetriamine, hexamethyldiamine, p-phenyldiamine, pyridine, 2,2'-bipyridine, pyrrole, all compounds belonging to amine groups, and mixtures of amines mentioned above.

A group of an inorganic powder and/or a short fiber is added when increase of durability and loading-support of a modified, RAP-recycled, temperature-controlled asphalt mix is needed. This group occupies 0.5-100 wt% in a recycling modifier. The property improvement can be neglected when it is under 0.5 wt%. Examples of an inorganic powder include calcium carbonate powder, limestone powder, aggregate powder, toner, silica, bentonite, zeolite, clay powder, mica, carbon black, steel slag powder, furnace slag powder, various cement, fly ash, plaster, lime powder and mixtures of the above powders.

Examples of a short fiber include a short length of nylon fiber, polyester fiber, polyethylene fiber, polypropylene fiber, carbon fiber, cellulose fiber, glass fiber, asbestos, and mixtures of the above fibers.

A temperature-controlling agent is the agent that sets a mixing temperature in production when RAP and a recycling modifier are mixed together. Less is the mixing temperature, more reduction in heating fuel and less evolvement of harmful gasses can be achieved. However, one cannot reduce mixing temperature arbitrary, because physical properties and applications of mixing materials must be considered. Mixings changing with temperature can be classified as cold mixing (5-30°C), semi-warm mixing (30-100°C), warm mixing (100-150°C), and hot mixing (150-180°C). As one selects and adds a proper temperature-controlling additive to RAP-recycled mixes, one of mixings mentioned above can be realized. The reason of using a temperature-controlling agent to be in the range of 0.1-20 parts by weight is to consider that the temperature effect is almost ignored under 0.1 parts by weight, and pavement rutting due to weak viscosity or fatigue cracking due to strong brittleness can be happened over 20 parts by weight added.

Mixing temperature is defined to be the one of RAP reached by heating. The reason of mixing temperature to be 5-180°C is to consider that cold mixing should be performed above 5°C and the hot mixing should be under 180°C. Under 5°C, cold mixing can cause pavement construction problems due to cooled materials and undesirable material degradation by heating can be happened above 180°C. A broad mixing temperature range of 5-180°C is to use different temperature-controlling agents for the purpose of adjusting the production method to one of the mixing methods such as cold mixing, semi-warm mixing, warm mixing, and hot mixing. The reason of mixing time to be 0.5-3 minutes is that homogeneous mixing cannot be obtained under 0.5 minutes and unrealistically low production is resulted above 3 minutes.

The composition of a temperature-controlling agent to adjust a mixing temperature is constituted from the partial or the total combination of 0.5-100 wt% of a water blowing agent, 0.5-100 wt% of a wax and 0.5-100 wt% of a chemical blowing agent. If more than one is used, the ratio of combination is arbitrary, but the total temperature-controlling agent should belong to be in the range of 0.1-20 parts by weight on the basis of 100 parts by weight of RAP.

A water blowing agent in a temperature-controlling agent can take a role of binding RAP with an inorganic powder in a recycling modifier at an atmospheric temperature in recycling 100 wt% of RAP. In addition, since water is evaporated at 100°C, a water blowing agent can foam the melted old asphalt binder in RAP to lower its viscosity, it can make the semi-warm mixing and the warm mixing be possible. A water blowing agent can be added to mix 100 parts by weight of RAP and 0.1-20 parts by weight of a recycling modifier as a partial or a total component of a temperature-controlling agent to make cold mixing, semi-warm mixing or warm mixing be possible. The water blowing agent can occupy 0.5-100 wt% in a temperature-controlling agent. Below 0.5 wt%, the agent cannot be effective in performing the role of a temperature-controlling agent.

Here, a group of a water blowing agent is characterized to include,

Water, inorganic powders containing water (zeolite, bentonite, silicagel, clay, mica, calcium chloride, etc.), magnesium hydroxide, aliminium hydroxide, concentrated emulsions (ethylene-vinylacetate emulsion, acryl emulsion, cationic-, anionic-, nonionic-asphalt emulsion, etc.), (cationic-, anionic-, nonionic-) surfactants, (styrenebutadien rubber, nitrilbutadiene rubber, isoprene rubber, natural rubber) latex, water solution of (carboxy-methyl-cellulose, polyacrylamide, polyethyleneoxide, polyvinylalcohol, polyvinylacetate, glycol) and all mixtures of the above chemicals.

A wax as a temperature-controlling agent mostly possesses a melting point. It characterizes to demonstrate a hard physical property of a solid under the melting point, but its viscosity suddenly weakens like water above the melting point. Such a wax plays a function of lowering a production and a construction temperature of RAP-recycled mixes by dropping the mix viscosity considerably when the mixing temperature reaches above its melting point. A wax is added to 100 parts by weight of RAP and 0.1-20 parts by weight of a recycling modifier as a partial or an exclusive temperature-controlling agent, when semi-warm mixing or warm mixing is chosen in production. A wax can occupy 0.5-100 wt% of a temperature-controlling agent. Under 0.5 wt%, it cannot play a function of a temperature-controlling agent due to negligible effect shown.

Here, a group of a wax is characterized to include paraffin wax, microcrystalline wax, Montan wax, Sasol wax, caunauba wax, polyethylene wax, ethylenevinylacetate wax, polypropylene wax, hardened castor oil, 12-hydroxystearic acid, aliphatic petroleum resin, aromatic petroleum resin, aliphatic-aromatic co-petroleum resin, lauric amide, bisamide wax (or ethylenebisstearamide), stearic amide, oleic amide, ericaic amide, n-oleylstearic amide, n-stearylstearic amide, n-stearylericaic amide, di-heptanedecylketon(or stearon, CH₃₍CH₂₎₁₆₋CO-(CH_{2)16C}H₃), tar of pine tree, rosin, rosin salt and all mixtures of the above waxes.

A chemical blowing agent as a temperature-controlling agent should have its blowing temperature range to be 50-140°C. A chemical blowing agent showing its blowing temperature in the range of 50-100°C can be used in semi-warm mixing, and that in 100-140°C can be used in warm mixing. In this respect, water can be called a blowing agent, too, because it evolves steam at 100°C. A blowing agent takes a role of making micro-pores in the mixture of old asphalt binders of RAP and a recycling modifier. These micro-pores reduce the viscosity of mixes to lower the production temperature as well as the construction one. A chemical blowing agent is added to 100 parts by weight of RAP and 0.1-20 parts by weight of a recycling modifier as a partial or an exclusive temperature-controlling agent, when semi-warm mixing or warm mixing is chosen in production. A chemical blowing agent can also occupy 0.5-100 wt% of a temperature-controlling agent. Under 0.5 wt%, a chemical blowing agent cannot be effective as a temperature-controlling agent due to negligible effect shown.

Here, a group of a chemical blowing agent is characterized to include azodicarbonamide, modified azodicarbonamide, azobisisobutyronitrile[AZDN,(CH₃)₂(CN)C-N=N-C(CN)(CH₃)₂], N'-dimethyl-N, N'-dinitrosoterephthalamide (NTA), [(C₆H₄)-[Con(CH₃)-NO]₂], sodium bicarbonate, ammonium bicarbonate and all mixtures of above blowing agents.

Manufacturing methods of modified, RAP-recycled, temperature-controlled asphalt mixes is to use a central recycling plant or an in-place recycling plant. The former can be divided into a continuous drum-mix type and a batch drum-mix type, while the latter can be classified into a hot-mix type by hot milling, a cold mix type by cold milling, and a hot-mix type by hot milling. One of these plants can be used in manufacturing the RAP-recycled mix of this invention.

RAP aggregates in cold bins stored by different sizes are weighed properly and transported on a belt into the inlet of virgin aggregates without adding any virgins in a modified continuous drum-mixer of a central RAP-recycling plant that is used to mix traditionally virgin and RAP aggregates together. A recycling modifier and a temperature-controlling agent can be added by an extrusion screw or other proper adding equipments at the position of an asphalt binder sprayer in a existing continuous drum mixer. The existing inlet of RAP aggregates is characterized not to be used.

For a batch-type mixing in the central RAP-recycling plant, all drum mix lines for virgin aggregates are excluded, and they are modified to accept more than 2 tons of RAP aggregates per a batch by using a drum mixer for only RAP aggregates. RAP aggregates in cold bins are weighed in sizes separately and transported on a belt into the RAP drum mixer, and there hot RAP aggregates passed from the drum are transported by bucket elevators to be stored in a single modified hot bin of the batch tower without passing through sieves. The proper amount of hot RAP aggregates stored in the hot bin are weighed and dropped into the pug-mill mixer. At the same time, a designed amount of a recycling modifier and a temperature-controlling agent are added into the same pug-mill mixer by using an appropriate adding-equipment, and then all materials in the mixer are mixed for 0.5-3 minutes at a high temperature to make uniform melts.

In the hot-in-place method by hot milling (Hot-In-Place Hot Recycling), a recycling modifier and a temperature-controlling agent are added to pre-heated RAP by modifying the equipments at the position of adding virgin hot mix, instead of adding a rejuvenator and virgin asphalt mixes. A well-unified hot mix is produced as the result.

In the cold-in-place method by cold milling (Cold-In-Place Cold Recycling), all cold RAP collected, more than one of inorganic powders as a recycling modifier, and more than one of water blowing agents as a temperature-controlling agent are all added into the cold mixer and are mixed to make a uniform cold material at an atmospheric temperature.

In the hot-in-place method by cold milling (Hot-In-Place Cold Recycling), the equipment for cold-in-place by cold milling (Cold-In-Place Cold Recycling) is modified to add cold RAP aggregates, a recycling modifier and a temperature-controlling agent into a mixer, and then they are well mixed at a high temperature to make a uniform hot melt.

### [Advantages]

First, in the contrast to the traditional RAP-recycled mix produced by using limited small use of RAP and large use of the virgin asphalt mix, this invention proposes to use 100% RAP in recycling without adding any virgin materials. As the result, the waste disposal fee is decreased due to no pile-up of RAP, and the original material cost for pavement construction becomes saved due to no use of virgin materials, and environmental pollution due to extraction of RAP by raining is resolved, and destruction of natural rocks in producing aggregates is reduced, and finally virgin asphalt binders and aggregates can be saved.

Second, according to this invention, use of a recycling modifier can produce a modified, RAP-recycled, asphalt mix that can construct a RAP-recycled pavement demonstrating an excellent quality. The existing recycled pavement is not well accepted, so far, as a pavement of major roads. Key problems lie in generation of various early cracks including fatigue cracking and serious rutting that ends the pavement life. These problems are resolved by using a good quality of a recycling modifier, and thus pavement maintenance cost is expected to be saved considerably due to extended life.

Third, in the existing RAP-recycling asphalt pavement, potholes are often found after raining due to water penetration at interfaces between aggregates and asphalt binders. This invention has resolved such a problem by using an anti-stripping agent to prevent water penetration. This is a necessary technology to protect recycled asphalt pavements for the regions having much rains or snows.

Fourth, the existing technology produces the RAP-recycled mix by adding virgin materials and a rejuvenator to RAP aggregates, but this invention produces modified, RAP-recycled, temperature-controlled mix by adding a recycling modifier and a temperature-controlling agent to RAP aggregates. Such a temperature-controlling agent takes an additional role of lowering production and construction temperatures of modified RAP-recycled asphalt mix. This function brings special effects of reducing harmful gas evolvement, saving energy due to the decreased production temperature, extending pavement life due to reduced oxidative aging of recycled mixes, opening of early traffic, constructing pavement capability under relatively cold climates and long distance away from the production site, etc.

### [Description of Best Embodiments]

The 5 parts by weight of SBS, the 4 parts by weight of EVA, the 1 part by weight of stearic acid, the 0.1 parts by weight of pyroll and the 3 parts by weight of Sasol wax are poured into the heated mixer at 135°C, and they are mixed for 30 minutes to manufacture homogeneous fine particles of a warm mix recycling modifier. The 98.8 parts by weight of RAP particles having the maximum size of 19mm with an arbitrary gradation and 1.2 parts by weight of a temperature-controlling recycling modifier prepared above are added together and placed in an oven at 135°C to heat for 30 minutes. After the heated mix in the oven is poured into a mixer at 135°C and mixed for 3 minutes, the modified, RAP-recycled warm mix asphalt propose in this invention is manufactured.

### [Description of Embodiments]

Example 1

The 5 parts by weight of SBS, the 4 parts by weight of EVA, the 1 part by weight of stearic acid, the 0.1 parts by weight of pyroll and the 3 parts by weight of Sasol wax are poured into the heated mixer at 135°C, and they are mixed for 30 minutes to manufacture homogeneous fine particles of a warm mix recycling modifier. The 98.8 parts by weight of RAP particles having an arbitrary gradation with a maximum size of 19mm and 1.2 parts by weight of a temperature-controlling recycling modifier prepared above are added together and placed in an oven at 135°C to heat for 30 minutes. After the heated mix in the oven is poured into a mixer at 135°C and mixed for 3 minutes, the modified, RAP-recycled warm mix asphalt propose in this invention is manufactured.

To test the quality of the modified, RAP-recycled warm mix asphalt made above, the following tests are performed: The 1100 grams of the mix made are placed in a Marshall mold with an inner diameter of 101.6mm and a height of 100mm, and are compacted with the Marshall compactor by 50 strokes on each side of the mold. This makes a Marshall specimen with a diameter of 101.6mm and a height of 63.5mm. This procedure is repeated by 18 times to make18 specimens. After they are cured at the room temperature for a day, the Marshall Stability tests are carried out for three specimens to find out Marshall Stability and Flow Number.

In addition, an indirect tensile strength (ITS) test is conducted to examine the characteristic behaviors of the pavement structure. For this purpose, another three Marshall specimens made above, having a diameter of 101.6mm and a height of 63.5mm, are prepared by storing them in a temperature-controlled oven at 25°C for 3 hours before the test. Then the specimen is immediately placed between the loading strips positioned on the top and the bottom of the specimen. The indirect tensile load is applied on the top loading strip at a rate of 50mm/min until breakdown of the specimen happens.

To test rut-resistance, the 12 kilograms of the modified RAP-recycled warm mix asphalt made previously are placed in a lab wheel tracking mold at 135°C and are compacted at a rate of 17-23 passes/sec by repeatedly passing a pressurized compaction roller having a diameter of 46cm on the mix to obtain a test specimen with a dimension of 30cmx 30cmx 5cm. After the test specimen is placed at room temperature more than 18 hours, it is cured in the temperature-controlled oven at the test temperature of 60°C for 6 hours. By applying repeated loading on the cured specimen, deformation with respect to number of roller passes is measured. From the measurement, Dynamic Stability is obtained from the deformation values during 40-60 minutes passed from beginning. The test temperature is 60°C, the contact pressure of the tracking roller on the specimen is 5.6kgf/cm², the roller tracking speed is 42 passes per minute, the traveling distance is 23cm/pass, the total run-time is 60 minutes, and the width and the diameter of the tracking roller are 5cm and 20cm, respectively.

To measure the abrasive resistance of the modified RAP-recycled warm mix asphalt under cold environment by using friction of a chain, labeling testing is conducted. The procedures to make specimens are identical to those of the above Dynamic Stability Testing. The table installed by the test specimen is rotated at the speed of 5 rpm. At the same time, a wheel with a diameter of 250mm and a width of 100mm equipped with12 chains is also rotated at 200rpm directly above the table and then it slowly comes down with rotation to touch the specimen on the table while the specimen rotates in the opposite direction from the upper wheel. The chains attached on the wheel wear out the surface of the specimen upon contact, and the amount of the abrasion is measured.

All test results are shown in **[**Table 1**]** by comparing to a virgin asphalt mix.

**[Table 1]**

| Test Item | | Values of Test Results | | Unit |
|---|---|---|---|---|
| | | Virgin Asphalt Mix | Modified, RAP-recycled, Temperature-controlled Asphalt Mix | |
| Marshall Test | Marshall Stability | 1150 | 1650 | kgf |
| | Flow Number | 28 | 37 | 0.1mm |
| Indirect Tensile Test | | 1.3 | 1.8 | KN |
| Dynamic Stability (Roller Tracking Test) | | 400 | 1200 | No. of passes/min to make 1 mm deformation |
| Labeling Test | | 4.0 | 2.8 | Abrasion % |

Keep in mind that the production temperature of the modified RAP-recycled warm-mix asphalt is 135°C which is 30°C lower than that of the virgin hot mix asphalt which is 165°C. This means that the modified recycled warm-mix asphalt can be produced at 30°C lower than the conventional hot mix asphalt. As the result, saving of production fuel cost is expected. As shown in **[**Table 1**]** , the modified recycled warm mix asphalt using a recycling modifier of this invention displays improved values 43% in Marshall Stability and 32% in Flow Value such that characteristics of Marshall Stability are confirmed to be improved considerably.

Further more, the modified recycled warm mix asphalt shows 38% increase in Indirect Tensile Strength, the 200% increase in Dynamic Stability, and the 30% decrease in Abrasion such that mechanical characteristics and durability are appeared to be improved a lot.

The above test results tell that the modified RAP-recycled warm mix asphalt made from a recycling modifier of this invention is verified to show excellent mechanical performance and durability such as flow resistance, abrasion resistance, dynamic stability, crack resistance, etc.

Example 2

The 100 parts by weight of RAP particles having an arbitrary gradation with a maximum size of 19mm, the 3 parts by weight of a clay and the 1 part by weight of cement and 0.2 parts by weight of p-phenyldiamine as a recycling modifier, the 8 parts by weight of a latex solution having 69% of a solid portion as a temperature-controlling agent are all inserted into a mixer at a room temperature, and are uniformly mixed to make cold, modified, RAP-recycled mix according to suggestions made in this invention. This mix is used to make test specimens at a room temperature by following procedures explained in Example 1, and these specimens are used to measure physical properties after they are cured for one day at a room temperature. The measured results are listed in **[**Table 2**]** .

**[Table 2]**

| | | | | |
|---|---|---|---|---|
| Test Item | | Values of Test Results | | Unit |

| Virgin Asphalt Mix | Modified, RAP-recycled, Temperature-controlled Asphalt Mix | | | |
|---|---|---|---|---|
| Marshall Test | Marshall Stability | 1150 | 1450 | kgf |
| | Flow Number | 28 | 34 | 0.1mm |
| Indirect Tensile Test | | 1.3 | 1.6 | KN |
| Dynamic Stability (Roller Tracking Test) | | 400 | 800 | No. of passes/min to make 1 mm deformation |
| Labeling Test | | 4.0 | 3.2 | Abrasion % |

Physical properties of the cold mix shown in Example 2 shows some decrease, compared to those of the warm mix in Example 1, but they are still appeared to be similar to those of the virgin hot mix. The cold mix has many benefits including no heating cost for production and no evolvement of pollution gases, even though its physical properties are similar to those of the virgin hot mix.

Example 3

The 100 parts by weight of RAP having an arbitrary gradation with a maximum size of 19mm are mixed in a heated mixer at 90°C to obtain a melt. The 4 parts by weight of clay and the 1 part by weight of cement and 0.1 parts by weight of pyridine as a recycling modifier, and 4 parts by weight of ammonium bicarbonate as a temperature-controlling agent are added to the melt in the mixer. They are mixed for 3 minutes. During mixing, a little volume expansion is observed. The above procedures produce a modified, RAP-recycled, temperature-controlled semi-warm mix asphalt. This mix is used to make several test specimens at a semi-warm temperature (90°C) according to the method described in Example 1. The physical properties of those specimens are measured after they are cured at a room temperature. The measured results are listed in **[**Table 3**]** .

**[Table 3]**

| Test Item | | Values of Test Results | | Unit |
|---|---|---|---|---|
| | | Virgin Asphalt Mix | Modified, RAP-recycled, Temperature-controlled Asphalt Mix | |
| Marshall Test | Marshall Stability | 1150 | 1250 | kgf |
| | Flow Number | 28 | 27 | 0.1mm |
| Indirect Tensile Test | | 1.3 | 1.4 | KN |
| Dynamic Stability (Roller Tracking Test) | | 400 | 500 | No. of passes/min to make 1 mm deformation |
| Labeling Test | | 4.0 | 3.8 | Abrasion % |

Physical properties of the semi-warm mix shown in Example 3 shows some decrease, compared to those of the warm mix in Example 1, but they are still appeared to be similar to those of the virgin hot mix. The semi-warm mix technology is considered to be desirable because reduction of heating cost for production and no evolvement of pollution gases are expected, even though its physical properties are similar to those of the virgin hot mix.

### [Possibility of Industrial Use]

A modified, RAP-recycled, temperature-controlled asphalt mix can be used as paving materials of wearing courses, surface layers, base layers, and sub-base layers for all asphalt pavements constructed for vehicle traffic roadways (highways, urban roads, industrial roads, local government roads, state highways, etc.), parking lots, and for airport taxiways, for loading and unloading docks.

## Claims

1. Compositions and manufacturing methods of modified, RAP-recycled, temperature-controlled, asphalt concrete mix to reuse 100% RAP in pavement construction are characterized to manufacture a RAP-recycled mix by entering 100 parts by weight of RAP aggregates into the inlet of virgin aggregates in a mixing chamber where 0.1-20 parts by weight of a recycling agent and 0.1-20 parts by weight of a temperature-controlling agent are added and mixed uniformly for 0.5-3 minutes at a temperature between 5-180°C.

2. Compositions of modified, RAP-recycled, temperature-controlled, asphalt concrete mix to reuse 100% RAP in pavement construction according to claim 1, wherein a composition of a recycling modifier can contain 0.5-100 wt% of a softening agent that is selected to be more than one from a group of materials including organic acids (adipic acid, fumaric acid, oxalic acid, (anhydride) maleic acid, stearic acid, oleic acid, palmitic acid, terephthalic acid, lauric acid, etc.), organic acid salts, hydrocarbon oils, aromatic oils, aliphatic oils, heavy oils, various rejuvenators, BTX(benzene-toluene-xylene) oils, asphalt binders for road pavements, plasticizers(DBP(dibutylphthalate), DOP(dioctylphthalate), PPA(polypropyleneadipate), etc.), liquid MMA(methylmethacrylate), liquid unsaturated polyester, liquid polyurethane, animal oils(cow oil, pig oil, dog oil, various fish oils, etc.), plant oils(bean oils, corn oils, sesame oil, perilla oil, cottonseed oil, castor oil, etc.), animal-plant mixed oils, mineral oil, phosphoric acid, starch, sulfur, waste oils of automobile and industry and mixtures of the above oils.

3. Compositions of modified, RAP-recycled, temperature-controlled, asphalt concrete mix to reuse 100% RAP in pavement construction according to claim 1, wherein a composition of a recycling modifier can contain 0.5-100 wt% of an elasticity-enhancing agent that is selected to be more than one from a group of materials including SBS(styrene-butadiene-styrene), SBR(styrene-butadiene rubber), SEBS(styrene-ethylene-butadiene-styrene), SIS(styrene-isoprene-styrene), acrylobutadiene rubber powder, polychloroprene rubber powder, butyl rubber powder, natural rubber powder, crumb rubber, NBR(nitril butadiene rubber) powder, isoprene rubber powder, EPDM(ethylene-propylene-diene-monomer) rubber powder, butadiene rubber powder, waste rubber powder and all mixtures of the above materials.

4. Compositions of modified, RAP-recycled, temperature-controlled, asphalt concrete mix to reuse 100% RAP in pavement construction according to claim 1, wherein a composition of a recycling modifier can contain 0.5-100 wt% of a viscosity-thickening agent that is selected to be more than one from a group of materials including HDPE(high density polyethylene), LDPE(low density polyethylene), LLDPE(linear low density polyethylene), PP(polypropylene), CPP(co-polypropylene), low molecular weight polyamide, Elvaloy, PVA(polyvinylacetate), EVA(ethylene vinylacetate copolymer), PB(polybutene), HIPS(high impact polystyrene), and mixtures of the above materials.

5. Compositions of modified, RAP-recycled, temperature-controlled, asphalt concrete mix to reuse 100% RAP in pavement construction according to claim 1, wherein a composition of a recycling modifier can contain 0.1-10 wt% of an anti-stripping agent that is selected to be more than one from a group of chemicals including anyline, 1-naphtylamine, n-cyclohexylamine, diphenylamine, n-methylanyline, dicyclohexylamine, p-phenylenediamine, 1,3,5-triaminobenzene, ethylenediamine, diethylenetriamine, hexamethyldiamine, p-phenyldiamine, pyridine, 2,2'-bipyridine, pyrrole, all chemicals belonging to amine groups, and mixtures of amines mentioned above.

6. Compositions of modified, RAP-recycled, temperature-controlled, asphalt concrete mix to reuse 100% RAP in pavement construction according to claim 1, wherein a composition of a recycling modifier can contain 0.5-100 wt% of more than one selected from groups of an inorganic powder and a short fiber where a group of an inorganic powder includes calcium carbonate powder, limestone powder, aggregate powder, toner, silica, bentonite, zeolite, clay powder, mica, carbon black, steel slag powder, furnace slag powder, various cement, fly ash, plaster, lime powder and mixtures of the above inorganic powders, and a group of a short fiber includes a short fiber of nylon, polyester, polyethylene and polypropylene, carbon fiber, cellulose fiber, glass fiber, asbestos, and mixtures of the above fibers.

7. Compositions of modified, RAP-recycled, temperature-controlled, asphalt concrete mix to reuse 100% RAP in pavement construction according to claim 1, wherein a composition of a temperature-controlling agent can contain 0.5-100 wt% of a wax that is selected to be more than one from a group of a wax including paraffin wax, microcrystalline wax, Montan wax, Sasol wax, caunauba wax, polyethylene wax, ethylenevinylacetate wax, polypropylene wax, hardened castor oil, 12-hydroxystearic acid, aliphatic petroleum resin, aromatic petroleum resin, aliphatic-aromatic co-petroleum resin, lauric amide, bisamide wax (or ethylenebisstearamide), stearic amide, oleic amide, ericaic amide, n-oleylstearic amide, n-stearylstearic amide, n-stearylericaic amide, di-heptanedecylketon(or stearon), tar of pine tree, rosin, rosin salt and all mixtures of the above waxes.

8. Compositions of modified, RAP-recycled, temperature-controlled, asphalt concrete mix to reuse 100% RAP in pavement construction according to claim 1, wherein a composition of a temperature-controlling agent can contain 0.5-100 wt% of a water blowing agent that is selected to be more than one from a group of said agent including water, inorganic powders containing water (zeolite, bentonite, silicagel, clay, mica, calcium chloride, etc.), magnesium hydroxide, aluminum hydroxide, concentrated emulsions (ethylene-vinylacetate emulsion, acryl emulsion, cationic-, anionic-, nonionic-asphalt emulsion, etc.), (cationic-, anionic-, nonionic-) surfactants, (styrenebutadien rubber, nitrilbutadiene rubber, isoprene rubber, natural rubber) latex, water solution of (carboxy-methyl-cellulose, polyacrylamide, polyethyleneoxide, polyvinylalcohol, polyvinylacetate, glycol) and all mixtures of the above chemicals.

9. Compositions of modified, RAP-recycled, temperature-controlled, asphalt concrete mix to reuse 100% RAP in pavement construction according to claim 1, wherein a composition of a temperature-controlling agent can contain 0.5-100 wt% of a chemical blowing agent that is selected to be more than one from a group of said agent including azodicarbonamide, modified azodicarbonamide, azobisisobutyronitrile[AZDN,(CH₃)₂(CN)C-N=N-C(CN)(CH₃)₂], N'-dimethyl-N, N'-dinitrosoterephthalamide (NTA), [(C₆H₄)-[Con(CH₃)-NO]₂], sodium bicarbonate, ammonium bicarbonate and all mixtures of above blowing agents.

10. Manufacturing methods of modified, RAP-recycled, temperature-controlled, asphalt concrete mix to reuse 100% RAP in pavement construction according to claim 1, wherein a modified, RAP-recycled, temperature-controlled, asphalt concrete mix is characterized to be manufactured by choosing one of mixing types from a continuous drum mixing type and a batch mixing type as a central recycling plant, or a hot mixing type by hot milling, a cold mixing type by cold milling and a hot mixing type by cold milling as an in-place recycling mobile plant.

11. Manufacturing methods of modified, RAP-recycled, temperature-controlled, asphalt concrete mix to reuse 100% RAP in pavement construction according to claim 10, wherein a continuous drum mixer is characterized to be modified for RAP aggregates (weighed by sizes according to an aggregate design and transported from cold bins by a belt) to enter into the inlet of virgin aggregates, and for a recycling modifier (transported by a type of an extrusion screw) and a temperature-controlling agent both to enter in the mixer at the existing position of an asphalt binder sprayer with the existing RAP inlet to be closed,
wherein a batch mixer is to modified to use only a RAP drum mixer (having a production capacity more than one metric ton) by excluding all lines of virgin-aggregate drum mixer, where RAP aggregates (weighed by sizes according to an aggregate design and transported from cold bins by a belt) enters into the inlet of RAP drum mixer for heating and then enters in a hot bin without going through sieves to be ready for RAP aggregates (weighed by a proper amount per a batch) to be dropped into a pug mill, where a proper amount of a recycling modifier and a warm mix additive are also entered into the mill at the same time to be mixed uniformly for a designated time period,
wherein the existing in-place recycling equipment (devised to accept RAP, virgin aggregates and virgin asphalt binders) should be modified to accept RAP, a recycling modifier and a temperature-controlling agent.
